# EUROPÄISCHE PATENTSCHRIFT

(11) **EP 1 712 495 B1**
(45) Veröffentlichungstag und Bekanntmachung des Hinweises auf die Patenterteilung: **22.07.2009**
(21) Anmeldenummer: 06007549.6
(22) Anmeldetag: 11.04.2006
(51) Int. Cl.: B65G 47/248, B65H 29/12, B42C 19/08

(54) **Vorrichtung zum Überführen von kontinuierlich geförderten Druckprodukten aus einer flachliegenden Position in eine stehende Position oder umgekehrt**
Device for the transfert of continuous conveyed printed products from a flat lying position to a vertical position or vice versa
Dispositif de transfert de produits imprimés délivrés de manière continue d'une position couchée à une position verticale ou inversement

(30) Priorität: 14.04.2005 DE 102005017159
(43) Veröffentlichungstag der Anmeldung: 18.10.2006
(73) Patentinhaber: Kolbus GmbH & Co. KG, D-32369 Rahden (DE)
(72) Erfinder: von Freden, Christoph, 27252 Schwaförden (DE)

(56) Entgegenhaltungen:
- DE-A1- 10 135 659
- DE-C- 960 257
- DE-C1- 19 757 717
- GB-A- 890 595
- JP-A- 5 278 839
- US-A- 4 411 350

## Beschreibung

Die vorliegende Erfindung betrifft eine Vorrichtung zum Überführen von kontinuierlich geförderten Druckprodukten, wie Buchblocks, Bücher oder Druckbogenstapel aus gefalzten und/oder ungefalzten Druckbogen, aus einer im Wesentlichen flachliegenden Position in eine stehende Position oder umgekehrt mit einem drallartig um eine Längsachse verdrehten Förderer.

Überführungen der genannten Art finden an verschiedenen Stellen der Prozesskette zur Herstellung von Büchern statt. Beispielsweise werden die auf einem Sammelförderer einer Zusammentragmaschine aus lose zusammengetragenen Falzbogen gebildeten Druckbogenstapel aus ihrer im Wesentlichen flachliegenden Stellung in eine stehende Stellung mit nach unten weisendem Rücken überführt, zur Übergabe an das Einfuhrsystem eines Klebebinders. Das Aufrichten erfolgt bei kontinuierlicher Förderung auf dem abgabeseitigen Ende des Sammelförderers, der gebildet ist aus einem Förderkanal und einer Förderkette mit Mitnehmern, welche die Druckbogenstapel auf dem Förderkanal vor sich herschieben, wobei zum Aufrichten der Druckbogenstapel der Förderkanal mit seinen Kanalblechen fortschreitend um eine Längsachse gewunden ist. Der Förderkanal ist im Aufrichtbereich aus mustergewalzten Kanalblechen mit darin eingelassenen Blasluftdüsen gebildet. Trotz dieser reibungsminimierenden Maßnahmen im Aufrichtkanal kommt es insbesondere beim Verarbeiten von Einzelblättern oder extrem dünnen Papiersorten zu einer Verschiebung des auf den Kanalblechen aufliegenden unteren Druckbogens gegenüber den darüber liegenden Druckbogen des Stapels.

Aus der DE 29 43 260 A1 ist eine Vorrichtung zum Überführen von Büchern aus einer senkrecht stehenden Stellung in eine waagerecht liegende Stellung bekannt unter Verwendung von zwei in einem rechten Winkel zueinander stehenden Rollenbahnen mit umlaufend angetriebenen Rollen, von denen jede Rollenbahn drallartig um eine Längsachse verdreht ist. Parallel zu den senkrecht stehenden Rollen der einen Rollenbahn befinden sich in einem Abstand zu dieser vom aufgabeseitigen Ende der Rollenbahn bis in den Übergangsbereich der Rollen von der senkrechten in die waagerechte Stellung Gegenhaltestangen, die ein Aufklappen der einlaufenden Bücher vor dem Niederlegen verhindern. Darüber hinaus sind Niederlegevorrichtungen bekannt mit zwei in einem rechten Winkel zueinander stehenden, angetriebenen Plattenkettenförderern, die jeweils entlang einer Längsachse um 90° verdrillt sind. Die einzelnen Förderrollen und Tragplatten dieser beiden bekannten Niederlegevorrichtungen bieten den zu überführenden Produkten jeweils eine geradlinienförmige, quer zur Förderrichtung orientierte Auflagefläche. Aufgrund der verdrillten Anordnung der Förderrollen bzw. Tragplatten liegen insbesondere weniger flexible Druckprodukte nur teilweise auf den Fördermitteln auf. Mit den dadurch verursachten schlupfbehafteten Förderbedingungen ist eine positionsgenaue und damit taktsynchrone Förderung, insbesondere bei Anfahr- und Stoppvorgängen nicht gegeben, sodass eine zusätzliche Eintaktung der Bücher in Folgemaschinen erforderlich wird. Die Überführungsvorrichtungen sind zudem nur eingeschränkt zum Aufrichten von Produkten geeignet. Bei der Vorrichtung aus der DE 29 43 260 A1 ist obendrein ein Walkeffekt bei lose übereinander gestapelten Druckbogen zu beobachten, wodurch sich untere Druckbogen gegenüber den darüber liegenden nach hinten verschieben können.

Zum Niederlegen und Aufrichten sind außerdem verdrillte Klemmriemenförderer bekannt mit über jeweils zwei Umlenkrollen gelegten Riemen, die zwischen den Umlenkrollen gemeinsam um 90° geschränkt sind. Aus der DE 30 06 266 A1 ist ein um 180° verdrillter Klemmriemenförderer als Wendeinrichtung bekannt zum Umkehren kontinuierlich geförderter Druckprodukte um 180°. Diese bekannten Klemmriemenförderer sind kompliziert aufgebaut, weil für eine befriedigende Führung der verdrillten Förderriemen mehrere verschiedenartige Führungsmittel erforderlich sind. Ferner lassen sich Relativbewegungen zwischen den Förderriemen nicht vermeiden, die ein Verschieben der Druckbogen im Stapel oder der Einzelteile von frisch gebundenen Buchblocks verursachen.

Der vorliegenden Erfindung liegt die Aufgabe zugrunde, eine Vorrichtung zum Überführen von Druckprodukten der gattungsgemäßen Art zu schaffen, die eine äußerst schonende Handhabung der Druckprodukte gewährleistet und ein taktsynchrones Überführen bei hoher Taktleistung ermöglicht.

Aus der JP 05 278 839 ist eine Fördereinrichtung zum Aufrichten von Büchern bekannt, bei der die Bücher entlang einer Führung auf einem ersten, horizontal und geradlinig verlaufenden Förderriemen und unter zusätzlicher Anlage an am Förderriemen befestigten Mitnehmern vorgeschoben werden. Ein aus der Förderebene des ersten Förderriemens nach schräg oben in Richtung Führung verlaufender und dabei schneller laufender, zweiter Förderriemen richtet die flachliegend zugeführten Bücher auf. Dabei kippen und rutschen die Bücher auf dem ersten Förderriemen von der flachliegenden Auflage in eine stehende Auflage. Die Fördereinrichtung eignet sich aufgrund der vielfältigen Relativbewegungen der Bücher zu den genannten Förderriemen nur zum Aufrichten von gebundenen Büchern, nicht aber von losen Buchblocks. Außerdem muss mit Schleifmarkierungen an Büchern mit empfindlichen Oberflächen gerechnet werden.

Diese Aufgabe wird erfindungsgemäß durch die Merkmale des kennzeichnenden Teils des Anspruchs 1 gelöst. Weitere vorteilhafte Ausgestaltungen ergeben sich aus den Unteransprüchen.

Die Erfindungsidee liegt darin, dass die Druckprodukte während der Überführung von Mitnehmern vorgeschoben und dabei gleichzeitig zumindest teilweise auf einem weiteren Fördermittel aufliegen. Mit dem zweiten Fördermittel wird verhindert, dass sich außermittig vorgeschobene Druckprodukte vor dem Mitnehmer wegdrehen. Das unten liegende Teilprodukt bzw. Einzelteil des Druckprodukts wird von dem zweiten Förderer sicher mitgenommen. Eine Relativverschiebung findet nicht mehr statt, weil die der Förderrichtung entgegenwirkende Reibungskraft auf ein Minimum reduziert werden konnte.

Mit der Erfindung wird ein besonders schonender Transport von aus empfindlichen Einzelteilen oder Teilprodukten bestehenden Druckprodukten ermöglicht, welche auf der Unterseite sogar aus dünnen Einzelblättern bestehen können. Es hat sich gezeigt, dass hierfür bereits eine schmale, von den Tragelementen dargebotene Traglinie ausreicht, welche im Wesentlichen in einer Wirklinie mit dem betreffenden Mitnehmer am Druckprodukt wirkt. Durch die Mitnehmer ist eine taktsynchrone Förderung sichergestellt, sodass die Druckprodukte z.B. ohne erneute Eintaktung in eine nachfolgende Bearbeitungsmaschine übergebbar sind.

Die Vorrichtung ist für eine Vielzahl von in der Papier- und Druckweiterverarbeitung anfallenden Druckprodukten geeignet und ermöglicht dabei hohe Überführungsleistungen. Ausgehend von der Erfindungsidee kann die Vorrichtung zum Aufrichten oder zum Niederlegen ausgebildet werden. Sie zeichnet sich durch eine einfache Konstruktion aus, wobei sie in vor- oder nachgelagerten Maschinen integrierbar ist. Beispielsweise kann es sich bei dem ersten Förderer mit den Mitnehmern um eine Sammelkette einer Zusammentragmaschine handeln, die am auslaufseitigen Ende drallartig verdreht ist.

Im Folgenden wird anhand der Zeichnung ein Ausführungsbeispiel der Erfindung näher beschrieben. Es zeigen:
- **Fig. 1**: in perspektivischer Ansicht eine erfindungsgemäße Aufrichtvorrichtung;
- **Fig. 2**: die Aufrichtvorrichtung in einer schematischen Seitenansicht;

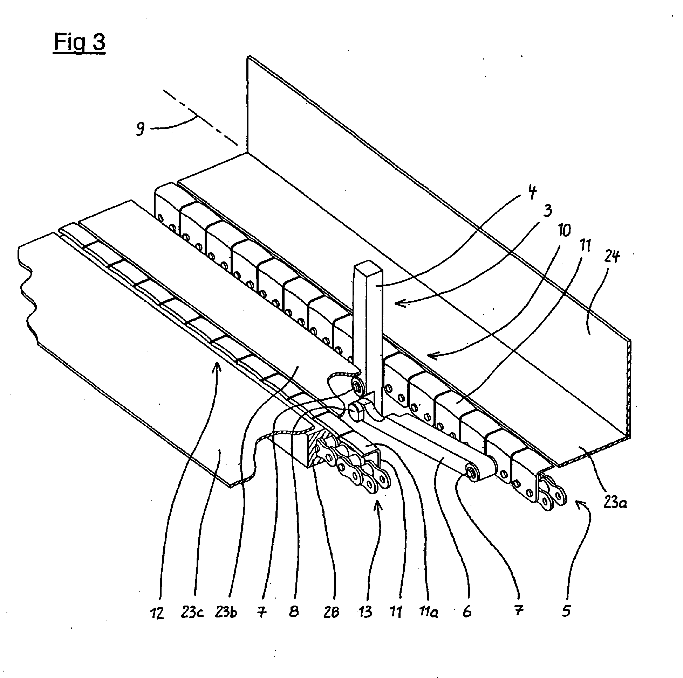

- **Fig. 3**: eine perspektivische Detailansicht von den Fördermitteln der Aufrichtvorrichtung.

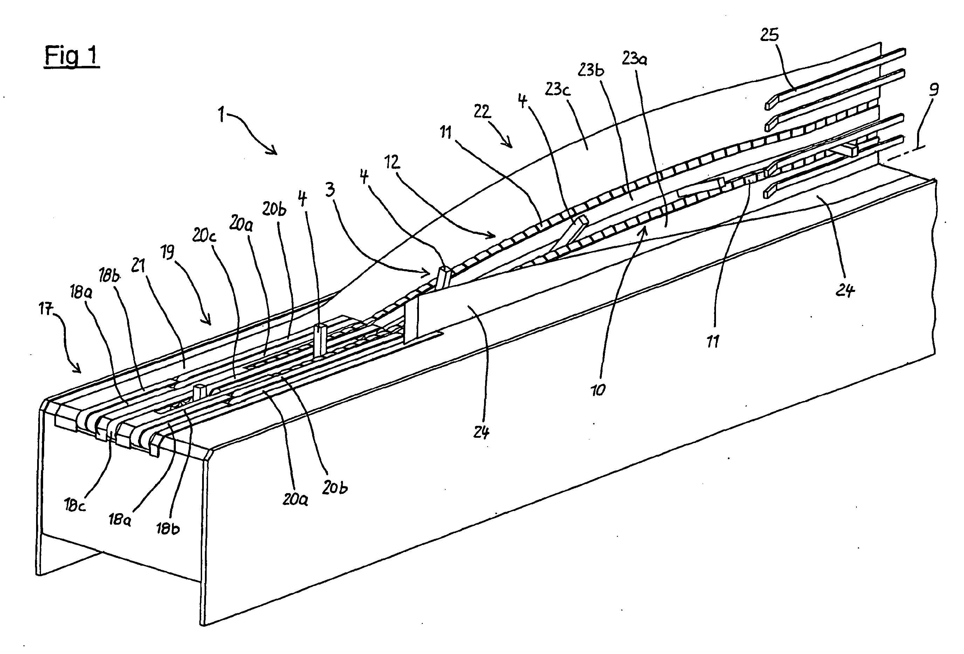

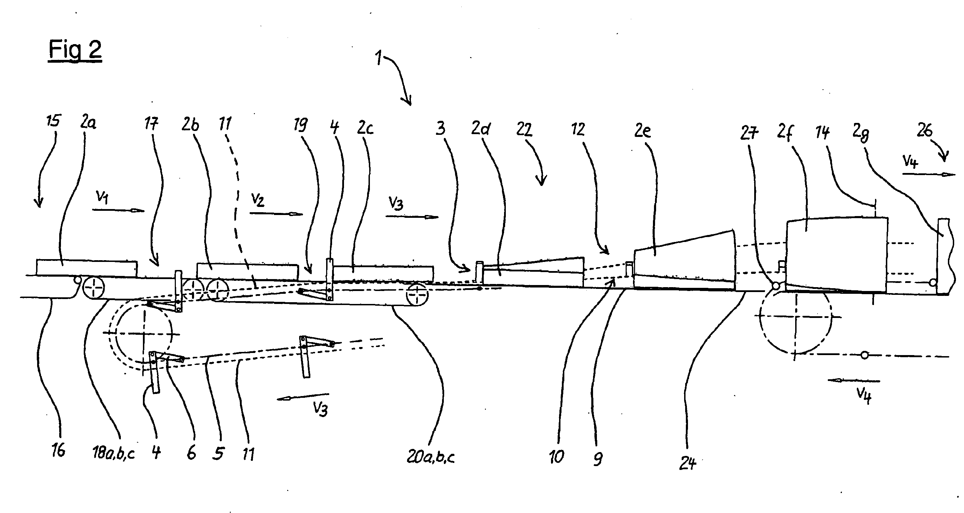

Die in den Fig. 1 und 2 gezeigte Aufrichtvorrichtung 1 ist zum Aufrichten von Druckprodukten, beispielsweise aus losen Blättern gebildeten Blattstapeln 2 a...g, ausgebildet, welche auf einem Transportband 16 eines Zuförderers 15 flach aufliegend in annähernd festen Abständen zueinander der Aufrichteinrichtung 1 zugeführt werden. Die Blattstapel werden bei synchroner Fördergeschwindigkeit v₁ von einem aus mehreren nebeneinander angeordneten Förderiemen 18 a, b, c gebildeten Synchronriemenförderer 17 übernommen, wie in Fig. 2 anhand des Blattstapels 2 a gezeigt.

Die einzelnen Förderiemen 18 a, b, c reichen unterschiedlich weit und werden von Förderriemen 20 a, b, c eines nachfolgenden Bremsriemenförderers 19 abgelöst, der mit einer geringeren Fördergeschwindigkeit v₂ den Blattstapel 2 b weiterfördert.

Die Förderriemen 18 a, b, c und 20 a, b, c sind von einem Gleitblech 21 umgeben, das Öffnungen für Fördermittel aufweist, welche die Blattstapel vom Bremsriemenförderer 19 übernehmen. Vorgesehen ist ein erster Förderer 3 mit in einem gleichen gegenseitigen Abstand zueinander angeordneten Mitnehmern 4, die in einer Förderlücke hinter dem jeweiligen Blattstapel 2 b auftauchen und aufgrund ihrer höheren Fördergeschwindigkeit v₃ den Blattstapel 2 c erreichen und nachfolgend vorschieben.

Zusätzlich zum Förderer 3 ist ein zweiter Förderer 10 vorgesehen, der benachbart zu den Mitnehmern 4 eine endlose Reihe von Tragplatten 11 darbietet, auf denen die Blattstapel 2 c...g mit ihrer Hauptfläche teilweise aufliegen. Ein dritter Förderer 12 mit Tragplatten 11 ist parallelversetzt zum Förderer 10 angeordnet, wodurch den Blattstapeln 2 c...g noch eine weitere Traglinie dargeboten wird.

Die Förderer 10 und 12 mit ihren Tragplatten 11 durchdringen schräg von unten kommend die Förderebene des Bremsriemenförderers 19 und sind derart geführt, dass sie den Blattstapel 2 b erst dann von den Förderriemen 20 a, b, c und dem Gleitblech 21 abheben, wenn der entsprechende Mitnehmer 4 bereits im Kontakt mit dem Blattstapel 2 b ist.

Am Ende des Bremsriemenförderers 19 gehen die genannten Förderer 3, 10 und 12 in einen verdrillten Verlauf über, wobei die Förderer entlang einer Längskante 9 um 90° verdreht sind. Es entsteht eine verdrillte Aufrichtstrecke 22, in der die Blattstapel aus ihrer flachliegenden Position in eine stehende Position überführt werden.

Zur zusätzlichen Abstützung der aufzurichtenden Blattstapel 2 d...f weist die Aufrichtstrecke 22 eine Stützbahn als Gleitfläche auf, die aus verdrillten, neben den Förderern 3, 10 und 12 angeordneten Stützbahnblechen 23 a, b, c gebildet ist, welche gegenüber den Tragplatten 11 zurückstehen, sodass eine Förderung der Blattstapel 2 d...f durch die Tragplatten 11 gegeben ist. Ein weiteres verdrilltes Stützbahnblech 24 bildet eine in einem rechten Winkel zur ersten Stützbahn verlaufende zweite Stützbahn aus, an der sich zunächst die Blattstapel 2 d...f mit ihrer Seitenkante anlegen. Mit zunehmender Aufrichtung in die stehende Position werden jedoch die Blattstapel 2 e, f von dem Stützbahnblech 24 getragen, während sich die Blattstapel an den Tragplatten 11 der Förderer 10, 12 und ggf. den Stützbahnblechen 23 a, b, c nur noch abstützen, wobei die Förderung im Wesentlichen durch die Mitnehmer 4 des Förderers 3 erfolgt.

Am auslaufseitigen Ende der Aufrichtstrecke 22 befinden sich parallel zu der aus den Stützbahnblechen 23 a, b, c gebildeten Stützbahn Führungsstangen 25, die ein Aufklappen oder Umfallen des aufgerichteten Blattstapels 2 f verhindern und den Blattstapel 2 g in den Förderkanal eines nachfolgenden Wegförderers 26 leiten. Dieser Wegförderer 26 kann beispielsweise Bestandteil des Einfuhrsystems eines Klebebinders sein, in dem die Blattstapel zu klebegebunden Buchblocks oder Broschuren weiterverarbeitet werden. Er weist in einem festen Abstand zueinander angeordnete Mitnehmer 27 auf, welche die Blattstapel mit einer höheren Geschwindigkeit v₄ von den Mitnehmern 4 des Förderers 3 übernehmen.

Der erste Förderer 3 weist eine Transportkette 5 auf, die als Seitenbogenkette in Führungsschienen 28 entsprechend dem Förderverlauf der Aufrichtvorrichtung 1 geführt ist und an der die Mitnehmer 4 drehbeweglich über verlängerte Kettenbolzen 7 seitlich aufgenommen sind, wobei jeder Mitnehmer 4 über einen zugeordneten Lenker 6 gesteuert ist. Letzterer ist einerseits über einen Bolzen 8 drehbeweglich mit dem Mitnehmer 4 und andererseits drehbeweglich auf einem verlängerten Kettenbolzen 7 der Transportkette 5 verbunden.

Die Lenker- und Hebellängen sind derart ausgelegt, dass die Mitnehmer 4 während der Förderung von Blattstapeln 2 c...f stets senkrecht zur Förderebene geführt sind. Insbesondere verbleiben die Mitnehmer 4 im Bereich der Umlenkung um die Umlenkachse 14 wenigstens solange in senkrechter Position zur vertikalen Förderebene, bis die Mitnehmer 4 unter dieser Förderebene abtauchen, wodurch eine kontinuierliche Übernahme durch die Mitnehmer 27 des Wegförderers 26 ermöglicht wird.

Zur Ausbildung des zweiten Förderers 10 ist die Transportkette 5 mit den genannten Tragplatten 11 versehen, die als abgewinkelte Kettenlaschen ausgebildet sind. Der erste Förderer 3 und der zweite Förderer 10, die quasi entlang einer Wirklinie an den Blattstapeln wirken, sind dadurch zwangsweise synchron angetrieben. Der dritte Förderer 12 ist von einer separaten Transportkette 13 gebildet, welche als Seitenbogenkette parallelversetzt zur Transportkette 5 in Führungsschienen 28 entsprechend dem Förderverlauf der Aufrichtvorrichtung 1 geführt ist und aufgrund der Verdrillung um die Längsachse 9 einen etwas längeren Laufweg aufweist als die Transportkette 5.

Die Tragplatten 11 beider Förderer 10 und 12 weisen jeweils eine ballige Kalottentragfläche 11 a auf, wodurch eine optimale Anlegefläche insbesondere in der verdrillten Aufrichtstrecke 22 für die Blattstapelunterseite gegeben ist. Die Kalottentragfläche 11 a ist zudem mit einer glatten Oberfläche versehen, wodurch sich die Blattstapel 2 c...f in geneigten Förderabschnitten entsprechend ihrer Schwerkraft zum seitlichen Stützbahnblech 24 hin bewegen können, während in flachliegenden Förderabschnitten die Blattstapel 2 c, d und insbesondere deren untere Einzelblätter von den Tragplatten 11 verschiebungsfrei zu den Mitnehmern mitgefördert werden.

Die Aufrichtvorrichtung 1 eignet sich insbesondere auch zum Aufrichten von Blattstapeln aus sehr dünnen Einzelblättern. Bei entsprechender Umgestaltung der Zu- und Wegförderer sowie der Mitnehmeranlenkung ist ebenso ein produktschonendes Niederlegen solcher Druckprodukte möglich. Ebenso wird mit der Aufrichtvorrichtung 1 ein produktschonendes Aufrichten oder Niederlegen von anderen empfindlichen Druckprodukten, wie frisch gebundenen Büchern, Broschuren oder Buchblocks, Lagenstapeln mit gefalzten Druckbögen aus sehr dünnem Papier usw., ermöglicht.

In alternativen Ausgestaltungsmöglichkeiten können die beiden rechtwinklig zueinander angeordneten Stützbahnen auch aus frei drehbaren Rollen oder Walzen gebildet sein. Für weniger empfindliche Produkte ergibt sich außerdem die Möglichkeit, auf die speziell ausgebildeten Tragplatten 11 zu verzichten und stattdessen die Druckprodukte auf den Stirnseiten der Kettenlaschen aufliegen zu lassen.

## Patentansprüche

1. Vorrichtung zum Überführen von kontinuierlich geförderten Druckprodukten (2 a...g), wie Buchblocks, Bücher oder Druckbogenstapel aus gefalzten und/oder ungefalzten Druckbogen, aus einer im Wesentlichen flachliegenden Position in eine stehende Position oder umgekehrt mit einem drallartig um eine Längsachse (9) verdrehten Förderer (3),
**gekennzeichnet**
• **durch** ein erstes, drallartig um die Längsachse (9) verdrehtes Fördermittel (3) mit die Druckprodukte (2 c...f) während der Überführung vorschiebenden Mitnehmern (4), und
• **durch** ein zweites, synchron angetriebenes und parallel zum ersten Fördermittel (3) verlaufendes Fördermittel (10 oder 12) mit Tragelementen (11), auf denen die Druckprodukte (2 c...f) während der Überführung mit ihrer Hauptfläche zumindest teilweise aufliegen bzw. sich abstützen.

2. Vorrichtung nach Anspruch 1, **dadurch gekennzeichnet, dass** die Tragelemente (11) des zweiten Förderers (10) zumindest eine schmale Traglinie darbieten, wobei die Tragelemente (11) im Wesentlichen in einer Wirklinie mit dem betreffenden Mitnehmer (4) am Druckprodukt (2 c...f) wirken.

3. Vorrichtung nach Anspruch 1 oder 2, **dadurch gekennzeichnet, dass** die in einem gleichen gegenseitigen Abstand zueinander angeordneten Mitnehmer (4) des ersten Fördermittels (3) stets nahezu senkrecht zur jeweiligen Förderebene geführt sind.

4. Vorrichtung nach einem der Ansprüche 1 bis 3, **gekennzeichnet durch** einen Fördertisch mit zwei in einem rechten Winkel zueinander stehenden, jeweils um eine Längsachse (9) verdrillten Stützbahnen (23 a, b, c, 24), wobei die Mitnehmer (4) des ersten Fördermittels (3) und die Tragelemente (11) des zweiten Fördermittels (10 oder 12) aus der Stützbahn (23 a, b, c) für die Hauptfläche der Druckprodukte (2 c...f) hervortreten.

5. Vorrichtung nach Anspruch 4, **dadurch gekennzeichnet, dass** die Stützbahnen als Gleitflächen (23 a, b, c, 24) ausgebildet sind.

6. Vorrichtung nach einem der Ansprüche 1 bis 5, **dadurch gekennzeichnet, dass** ein drittes Fördermittel (12) mit Tragplatten (10) vorgesehen ist, das parallelversetzt zum zweiten Fördermittel (10) verläuft.

7. Vorrichtung nach einem der Ansprüche 1 bis 6, **dadurch gekennzeichnet, dass** das zweite oder dritte Fördermittel (10 oder 12) oder ein weiteres dementsprechendes Fördermittel vom ersten Fördermittel (3) gebildet wird, indem das erste Fördermittel (3) mit Tragelementen (11) versehen ist.

8. Vorrichtung nach einem der Ansprüche 1 bis 7, **dadurch gekennzeichnet, dass** die Fördermittel (3, 10, 12) von Seitenbogenketten gebildet sind.

9. Vorrichtung nach Anspruch 8, **dadurch gekennzeichnet, dass** die Tragelemente von den Kettenlaschen selbst oder von an den Kettengliedern befestigten Tragplatten (11) gebildet sind.

10. Vorrichtung nach einem der Ansprüche 1 bis 9, **dadurch gekennzeichnet, dass** die Tragelemente (11) eine Tragfläche (11 a) aufweisen.

11. Vorrichtung nach Anspruch 10, **dadurch gekennzeichnet, dass** die Tragfläche (11 a) eine glatte Oberfläche aufweist.

12. Vorrichtung nach Anspruch 10 oder 11, **dadurch gekennzeichnet, dass** die Tragfläche (11 a) kalottenförmig ausgebildet ist.

13. Vorrichtung nach einem der Ansprüche 1 bis 12, **dadurch gekennzeichnet, dass** die Fördermittel (3, 10, 12) am einlaufseitigen Ende derart geführt sind, dass zur Übernahme flachliegend zugeführter Druckprodukte (2 b, c) zunächst die Mitnehmer (4) in Eingriff mit den Druckprodukten (2 c) bringbar sind, bevor diese von den Tragelementen (11) angehoben werden.

14. Vorrichtung nach Anspruch 13, **dadurch gekennzeichnet dass** den genannten Fördermitteln (3, 10, 12) ein die Druckprodukte (2 b, c) mit einer niedrigeren Geschwindigkeit (V₂) transportierender Riemenförderer (19) vorgeordnet ist, dessen Förderebene von den von unten kommenden Fördermitteln (3, 10, 12) durchdrungen wird.

## Claims

1. A device for transferring continuously transported printing products (2 a...g) such as, e.g., book blocks, books or sheet stacks consisting of folded and/or non-folded sheets from an essentially flat lying position into an upright position or vice versa by means of a conveyor (3) that is twisted about a longitudinal axis (9),
**characterized**
• **in** a first transport means (3) that is twisted about the longitudinal axis (9) and features pushers (4) that advance the printing products (2 c...f) during the transfer, and
• in a second transport means (10 or 12) that is driven synchronous and extends parallel to the first transport means (3) and features support elements (11), on which the printing products (2 c...f) are at least partially supported or lie with their primary surface during the transfer.

2. The device according to Claim 1, **characterized in that** the support elements (11) of the second conveyor (10) provide at least a narrow line of support, wherein the support elements (11) act upon the printing products (2 c...f) in essentially one line of action with the respective pusher (4).

3. The device according to Claim 1 or 2, **characterized in that** the pushers (4) of the first transport means (3) are equidistantly spaced apart from one another and always guided nearly perpendicular to the respective transport plane.

4. The device according to one of Claims 1 to 3, **characterized in** a conveyor table with two perpendicularly arranged support tracks (23 a, b, c, 24) that are respectively twisted about a longitudinal axis (9), wherein the pushers (4) of the first transport means (3) and the support elements (11) of the second transport means (10 or 12) protrude from the support track (23 a, b, c) for the primary surface of the printing products (2 c...f).

5. The device according to Claim 4, **characterized in that** the support tracks are realized in the form of sliding surfaces (23 a, b, c, 24).

6. The device according to one of Claims 1 to 5, **characterized in that** a third transport means (12) is provided that comprises support plates (10) and is offset relative to the second transport means (10) in a parallel fashion.

7. The device according to one of Claims 1 to 6, **characterized in that** the second or third transport means (10 or 12) or another corresponding transport means is formed by the first transport means (3) by providing the first transport means (3) with support elements (11).

8. The device according to one of Claims 1 to 7, **characterized in that** the transport means (3, 10, 12) are formed by lateral sheet chains.

9. The device according to Claim 8, **characterized in that** the support elements are formed by the link plates themselves or by support plates (11) mounted on the chain links.

10. The device according to one of Claims 1 to 9, **characterized in that** the support elements (11) feature a support surface (11 a).

11. The device according to Claim 10, **characterized in that** the support surface (11 a) has a smooth surface area.

12. The device according to Claim 10 or 11, **characterized in that** the support surface (11 a) is realized in a dome-shaped fashion.

13. The device according to one of Claims 1 to 12, **characterized in that** the transport means (3, 10, 12) are guided at the end on the inlet side in such a way that, in order to transfer printing products (2 b, c) supplied in a flat lying position, the pushers (4) can initially be engaged with the printing products (2 c) before they are raised by the support elements (11).

14. The device according to Claim 13, **characterized in that** a belt conveyor (19) that transports the printing products (2 b, c) with a slower speed (v₂) is arranged upstream of the aforementioned transport means (3, 10, 12), wherein the transport plane of said belt conveyor is penetrated by the transport means (3, 10, 12) arriving from below.

## Revendications

1. Dispositif pour transférer des produits imprimés transportés en continu (2 a...g), comme des blocs de livre, des livres ou des piles de feuilles d'impression venant de feuilles d'impression pliées et/ou non pliées, d'une position essentiellement horizontale à une position debout ou inversement, comprenant un convoyeur (3) tourné de manière torsadée autour d'un axe longitudinal (9),
**caractérisé**
• **par** un premier moyen de transport (3) tourné de manière torsadée autour de l'axe longitudinal (9) comprenant des entraîneurs (4) avançant les produits imprimés (2 c...f) pendant le transfert, et
• par un deuxième moyen de transport (3) entraîné de manière synchrone et parallèlement au premier moyen de transport (10 ou 12) avec des éléments porteurs (11), sur lesquels les produits imprimés (2 c...f) reposent respectivement s'appuient au moins partiellement par leur côté principal durant le transfert.

2. Dispositif selon la revendication 1, **caractérisé en ce que** les éléments porteurs (11) du deuxième transporteur (10) offrent au moins une ligne porteuse étroite, les éléments porteurs (11) agissant essentiellement dans une ligne d'action avec l'entraîneur (4) correspondant sur le produit imprimé (2 c...f).

3. Dispositif selon la revendication 1 ou 2, **caractérisé en ce que** les entraîneurs (4) du premier moyen de transport (3) placés dans un même écart opposé l'un par rapport à l'autre sont dirigés presque verticalement par rapport au plan de transport.

4. Dispositif selon l'une des revendications 1 à 3, **caractérisé par** une table de transport comprenant deux chemins d'appui (23 a, b, c, 24) en angle droit l'un par rapport à l'autre et respectivement torsadés autour d'un axe longitudinal (9) , les entraîneurs (4) du premier moyen de transport (3) et les éléments porteurs (11) du deuxième moyen de transport (10 ou 12) faisant saillie du chemin d'appui (23 a, b, c) pour le côté principal des produits imprimés (2 c...f).

5. Dispositif selon la revendication 4, **caractérisé en ce que** les chemins d'appuis sont des surfaces de glissement (23 a, b, c, 24).

6. Dispositif selon l'une des revendications 1 à 5, **caractérisé en ce qu'**un troisième, moyen de transport (12) avec des plaques porteuses (10) est prévu, lequel est décalé parallèlement au deuxième moyen de transport (10).

7. Dispositif selon l'une des revendications 1 à 6, **caractérisé en ce que** le deuxième ou troisième moyen de transport (10 ou 12) ou un autre moyen de transport correspondant du premier moyen de transport (3) est formé par le fait que le premier moyen de transport (3) est muni d'éléments porteurs (11).

8. Dispositif selon l'une des revendications 1 à 7, **caractérisé en ce que** les moyens de transport (3, 10, 12) sont des chaînes latérales.

9. Dispositif selon la revendication 8, **caractérisé en ce que** les éléments porteurs sont formés par les pattes des chaînes elles-mêmes ou par des plaques porteuses (11) fixées sur les membres des chaînes.

10. Dispositif selon l'une des revendications 1 à 9, **caractérisé en ce que** les éléments porteurs (11) présentent une face porteuse (11 a).

11. Dispositif selon la revendication 10, **caractérisé en ce que** la face porteuse (11 a) présente une surface lisse.

12. Dispositif selon la revendication 10 ou 11, **caractérisé en ce que** la face porteuse (11 a) est en forme de calotte.

13. Dispositif selon l'une des revendications 1 à 12, **caractérisé en ce que** les moyens de transport (3, 10, 12) sont amenés sur l'extrémité côté admission de telle manière que pour transférer des produits imprimés (2 b, c) horizontaux avancés, les entraîneurs (4) peuvent d'abord être mis en prise avec les produits imprimés (2 c) avant d'être soulevés par les éléments porteurs (11).

14. Dispositif selon la revendication 13, **caractérisé en ce que** dans lesdits moyens de transport (3, 10, 12) ont un transporteur à courroie (19) placé en amont transportant les produits imprimés (2 b, c) avec une vitesse plus réduite (v₂), dont le plan de transport est traversé par les moyens de transport (3, 10, 12) arrivant par le bas.
